# EUROPEAN PATENT APPLICATION

(11) **EP 4 542 897 A1**
(43) Date of publication of application: **23.04.2025**
(21) Application number: 23856368.8
(22) Date of filing: 21.07.2023
(51) Int. Cl.: H04L 1/00

(54) **COMMUNICATION METHOD AND SYSTEM, ELECTRONIC DEVICE, AND COMPUTER-READABLE MEDIUM**

(30) Priority: 25.08.2022 CN 202211031290
(71) Applicant: ZTE CORPORATION, Shenzhen, Guangdong 518057 (CN)
(72) Inventor: ZHANG, Weiliang, Shenzhen, Guangdong 518057 (CN)
(74) Representative: Canzler & Bergmeier Patentanwälte Partnerschaft mbB
(86) International application number: PCT/CN2023/108581
(87) International publication number: WO 2024/041278

(57) **Abstract**

The present application provides a communication method and system, an electronic device, and a computer-readable medium. The communication method comprises: receiving an Ethernet frame sent by a first terminal; and encapsulating a first port identifier of a first slave gateway and the Ethernet frame into a first gigabit-capable passive optical network encapsulation method (GEM) frame, and sending the first GEM frame to a master gateway, wherein the first port identifier is a port identifier used during communication between optical network units.

## Description

### TECHNICAL FIELD

The present application relates to the field of Passive Optical Network (PON) technology, and in particular, to a communication method, a communication system, an electronic device, and a computer-readable medium.

### BACKGROUND

With application and development of the PON technology, the PON technology gradually extends to home through Fiber to the Home (FTTH), domestic and international standards are correspondingly standardized, and Fiber to the Room (FTTR) is gradually developed. The FTTR can access Internet through an access network, and can also create a local area network to realize the interconnection communication in the home.

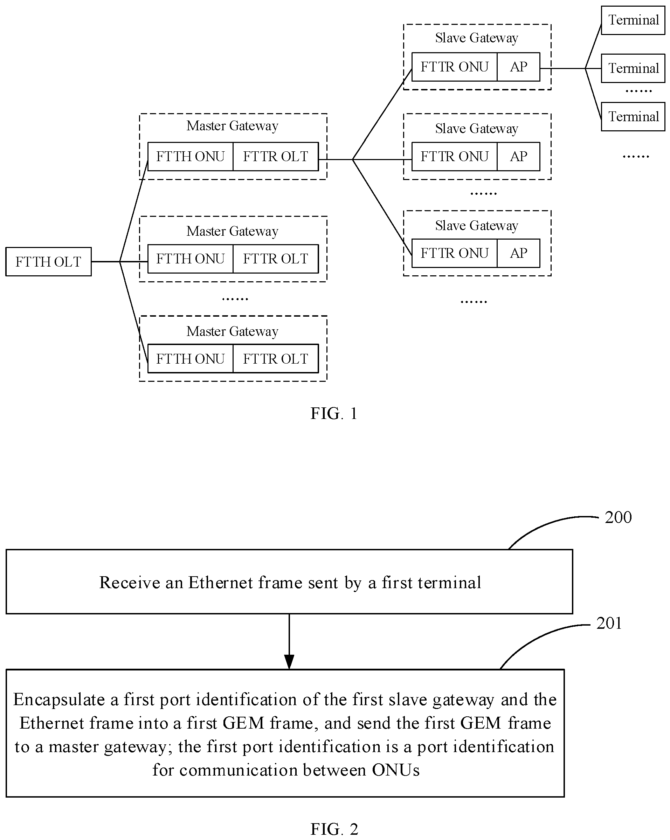

In practical applications, as shown in Fig. 1, FTTH Optical Network Unit (ONU) and FTTR Optical Line Terminal (OLT) are generally integrated into one device, which may be referred to as a master gateway. The master gateway is provided with an uplink optical port and a downlink optical port, is connected to the FTTH OLT through the uplink optical port and operates according to the FTTH ONU, and is connected to the FTTR ONU through the downlink optical port and operates according to the FTTR OLT.

The FTTR ONU and an Access Point (AP) are also integrated into one device, and may be called a slave gateway. The slave gateway is provided with an uplink optical port and a wireless interface, is connected to the FTTH OLT through the uplink optical port and operates according to the FTTH ONU, and is connected to a terminal through the wireless interface and operates according to the AP.

In some existing PONs, a communication time delay between FTTR ONUs is relatively large.

### SUMMARY

The present application provides a communication method, a communication system, an electronic device, and a computer-readable medium.

In a first aspect, embodiments of the present application provide a communication method, applied to a first salve gateway, including: receiving an Ethernet frame sent by a first terminal; encapsulating a first port identification of the first slave gateway and the Ethernet frame into a first gigabit-capable passive optical network (GPON) encapsulation method (GEM) frame, and sending the first GEM frame to a master gateway, with the first port identification being a port identification for communication between optical network units.

In a second aspect, embodiments of the present application provide a communication method, applied to a master gateway, including: receiving a first GEM frame sent by a first slave gateway, with the first GEM frame including a port identification; and in response to determining that the port identification in the first GEM frame is a port identification for communication between optical network units, sending the first GEM frame to all slave gateways.

In a third aspect, embodiments of the present application provide a communication method, applied to a third slave gateway, including: receiving a first GEM frame sent by a master gateway, with the first GEM frame including a port identification; and determining whether to perform corresponding processing on the first GEM frame according to the port identification in the first GEM frame.

In a fourth aspect, embodiments of the present application provide an electronic device, including: an at least one processor; and a memory having at least one program stored thereon, the at least one program, executed by the at least one processor, causes the at least one processor to implement the communication method described above.

In a fifth aspect, embodiments of the present application provide a computer-readable medium having a computer program stored thereon, the computer program, executed by a processor, causes the processor to implement the communication method described above.

In a sixth aspect, embodiments of the present application provide a communication system, including: a first slave gateway configured to receive an Ethernet frame sent by a first terminal, encapsulate a first port identification of the first slave gateway and the Ethernet frame into a first GEM frame, and send the first GEM frame to a master gateway, with the first port identification being a port identification for communication between optical network units; the master gateway configured to receive a first GEM frame sent by the first slave gateway, with the first GEM frame including a port identification, and in response to determining that the port identification in the first GEM frame is a port identification for communication between optical network units, send the first GEM frame to all slave gateways; and a third slave gateway configured to receive a first GEM frame sent by the master gateway, with the first GEM frame including a port identification, and determine whether to perform corresponding processing on the first GEM frame according to the port identification in the first GEM frame.

According to the communication method provided in the present application, the communication between the optical network units (ONUs) is performed based on the port identification for the communication between the ONUs, rather than the port identification for communication between the ONU and an optical line terminal (OLT), so that the first GEM frame is not to be parsed during being forwarded by the master gateway, i.e., service forwarding between the ONUs can be realized at a PON protocol layer of the master gateway, without through an Ethernet layer or an IP layer of the master gateway, thereby resulting in a reduced time delay.

### BRIEF DESCRIPTION OF DRAWINGS

Fig. 1 is a schematic structural diagram of a PON system in the existing art.
Fig. 2 is a flowchart of a communication method applied to a first slave gateway according to embodiments of the present application.
Fig. 3 is a schematic diagram of a frame structure of a GEM frame according to the present application.
Fig. 4 is a flowchart of a communication method applied to a master gateway according to embodiments of the present application.
Fig. 5 is a flowchart of a communication method applied to a third slave gateway according to embodiments of the present application.
Fig. 6 is a block diagram of a communication system according to embodiments of the present application.

### DETAIL DESCRIPTION OF EMBODIMENTS

In order to make those skilled in the art better understand the technical solutions of the present application, a communication method, a communication system, an electronic device, and a computer-readable medium, provided in the present application, are described in detail below with reference to the accompanying drawings.

Exemplary embodiments are described in detail below with reference to the accompanying drawings, but the exemplary embodiments may be embodied in different forms, and the present application should not be construed as limited to the embodiments set forth herein. In contrast, the embodiments are illustrated to make the present application thorough and complete, and for those skilled in the art more fully understanding the scope of the present application.

The embodiments of the present application and technical features in the embodiments may be combined with each other if no conflict is incurred.

As used in the present application, a term "and/or" includes any and all combinations of at least one of listed items.

The terms used in the present application are for a purpose of describing particular embodiments only, and are not intended to limit the present application. As used in the present application, singular forms "a" and "the" include plural forms as well, unless the context clearly defines otherwise. It should further be understood that terms "includes/comprises" and/or "made of/consisted of" in the present application are used to specify a presence of at least one of recited features, integers, steps, operations, elements or components, but do not preclude a presence or an addition of at least one of other features, integers, steps, operations, elements, components or groups thereof.

Unless otherwise defined, meanings of all terms (including technical terms and scientific terms) used herein are the same as meanings commonly understood by one of ordinary skills in the art. It should further be understood that terms, such as those defined in common dictionaries, should be construed as having a meaning that is consistent with that in background of the existing art and the present application, and should not be construed as having an idealized or over-formal meaning, unless expressly defined in the present application.

In some PONs, interconnection communication may be realized between FTTR ONUs by transferring through a master gateway, and in a general implementation, a Gigabit-Capable Passive Optical Network (GPON) Encapsulation mode (GEM) Port identification (Port-ID) is configured between an FTTR OLT and an FTTR ONU to realize communication between the FTTR OLT and the FTTR ONU, and then the FTTR OLT performs forwarding for communication between the FTTR ONUs.

At present, service forwarding between FTTR ONUs is to be realized through an Ethernet layer or an Internet Protocol (IP) layer of the master gateway, which may cause a relatively large time delay. For example, in an implementation of the communication between FTTR ONUs, the FTTR OLT parses a GEM frame to obtain an Ethernet frame, acquires a target Media Access Control (MAC) address from the Ethernet frame, maps the target MAC address to a target GEM Port-ID, re-encapsulates the Ethernet frame by adopting the target GEM Port-ID to obtain a new GEM frame, and sends the new GEM frame. During this process, besides parsing the GEM frame at a PON protocol layer and re-encapsulating the Ethernet frame into the new GEM frame, the GEM frame is further parsed at the Ethernet layer to obtain the target MAC address, and the target MAC address is mapped to the GEM Port-ID, which results in a relatively large time delay. In some scenarios, mapping between a target IP address and the target GEM Port-ID is further to be implemented at the IP layer, which also results in a relatively large time delay.

Fig. 2 is a flowchart of a communication method applied to a first slave gateway according to embodiments of the present application.

In a first aspect, referring to Fig. 2, embodiments of the present application provide a communication method, applied to a first slave gateway, including following operations 200 and 201.

At operation 200, receiving an Ethernet frame sent by a first terminal.

At operation 201, encapsulating a first port identification of the first slave gateway and the Ethernet frame into a first GEM frame, and sending the first GEM frame to a master gateway, with the first port identification being a port identification for communication between ONUs.

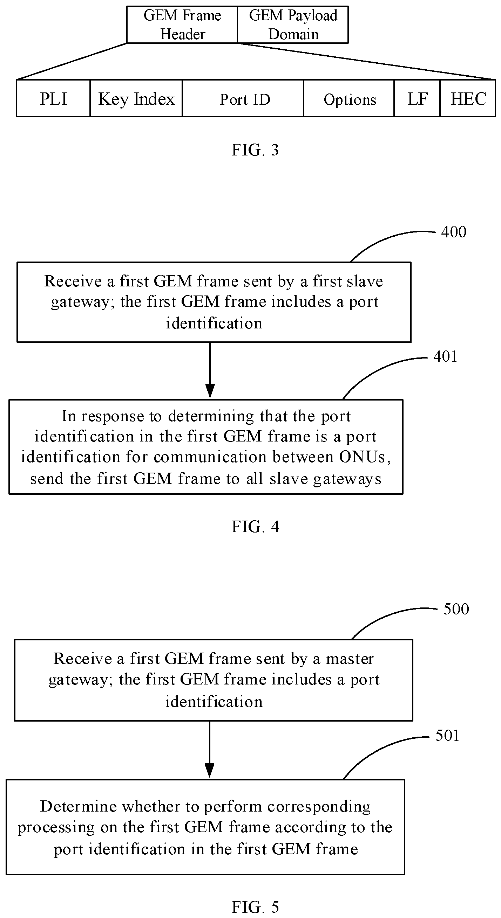

In some implementations, as shown in Fig. 3, the GEM frame includes a GEM frame header and a payload domain of the GEM frame.

In some implementations, the GEM frame header includes fields of: Payload Length Indication (PLI), Key Index, Port ID, Options, Last Fragment (LF), and Hybrid Error Correction (HEC).

In some implementations, the Port ID may be filled with a first port identification of a slave gateway, or a second port identification of the slave gateway. The first port identification is a port identification for communication between the ONUs, the second port identification is a port identification for communication between the ONU and an OLT.

In some implementations, the LF is configured to indicate whether the last fragment or not.

In some implementations, encapsulating the first port identification of the first slave gateway and the Ethernet frame into the first GEM frame includes: encapsulating the Ethernet frame into the payload domain of the first GEM frame, and encapsulating the first port identification of the first slave gateway into the GEM frame header of the first GEM frame.

In some implementations, encapsulating the first port identification of the first slave gateway into the GEM frame header of the first GEM frame includes: encapsulating the first port identification of the first slave gateway into the field of Port ID in the GEM frame header.

In some implementations, encapsulating the first port identification of the first slave gateway and the Ethernet frame into the first GEM frame includes: encapsulating the first port identification and a first identification of the first slave gateway, and the Ethernet frame into the first GEM frame.

In some implementations, the first identification may be a User Network Interface (UNI) Node Identification (Node ID) of the first slave gateway, or a UNI Node ID of a second slave gateway; the second slave gateway is a slave gateway connected with a second terminal, and the second terminal is a terminal to which a target MAC address in the Ethernet frame belongs.

In some implementations, the first identification may also be a device identification of the second slave gateway.

In some implementations, the UNI Node ID is configured to identify two ends performing communication therebetween. For example, two ONUs performing communication therebetween are denoted by 0 and 1 respectively, e.g., ONU1 is denoted by 1 and ONU2 is denoted by 0.

In some implementations, encapsulating the first port identification and the first identification of the first slave gateway, and the Ethernet frame into the first GEM frame includes: encapsulating the Ethernet frame into the payload domain of the first GEM frame, and encapsulating the first port identification and the first identification of the first slave gateway into the GEM frame header of the first GEM frame.

In some implementations, encapsulating the first port identification and the first identification of the first slave gateway into the GEM frame header of the first GEM frame includes: encapsulating the first port identification of the first slave gateway into the field of Port ID in the GEM frame header, and encapsulating the first identification into the field of Options in the GEM frame header.

In some implementations, in response to that the first identification is the UNI Node ID of the first slave gateway, or the first identification is the UNI Node ID of the second slave gateway, encapsulating the first identification into the field of Options in the GEM frame header includes: encapsulating the first identification into any bit in the field of Options.

In some implementations, encapsulating the first identification into any bit in the field of Options includes: encapsulating the first identification into a highest bit in the field of Options.

In some implementations, in response to that the first identification is the device identification of the second slave gateway, encapsulating the first identification into the field of Options in the GEM frame header includes: encapsulating the first identification into at least one bit in the field of Options.

In some implementations, encapsulating the first port identification and the first identification of the first slave gateway into the GEM frame header of the first GEM frame includes: encapsulating the first port identification, the first identification and a second identification of the first slave gateway into the GEM frame header of the first GEM frame; the second identification is configured to indicate whether the first GEM frame is a GEM frame communicated between the ONUs or a GEM frame communicated between the ONU and the OLT.

In some implementations, encapsulating the first port identification, the first identification and the second identification of the first slave gateway into the GEM frame header of the first GEM frame includes: encapsulating the first port identification of the first slave gateway into the field of Port ID in the GEM frame header, and encapsulating the first identification and the second identification into the field of Options in the GEM frame header.

In some implementations, the first identification and the second identification are encapsulated into different bits in the field of Options in the GEM frame header.

In some implementations, in response to that the first identification is the UNI Node ID of the first slave gateway, or the first identification is the UNI Node ID of the second slave gateway, the first identification is encapsulated into any bit in the field of Options, the second identification is encapsulated into any bit, except the bit occupied by the first identification, in the field of Options. For example, the first identification is encapsulated in the highest bit in the field of Options, and the second identification is encapsulated into any bit except the highest bit in the field of Options.

In some implementations, in response to that the first identification is the device identification of the second slave gateway, the first identification is encapsulated into at least one bit in the field of Options, and the second identification is encapsulated into any bit, except the bit occupied by the first identification, in the field of Options.

In some implementations, if the second identification is not encapsulated into the first GEM frame, values of a first port identification and a second port identification of the same slave gateway are different, so as to distinguish whether the first GEM frame is the GEM frame communicated between the ONUs or the GEM frame communicated between the ONU and the OLT.

If the second identification is encapsulated into the first GEM frame, the values of the first port identification and the second port identification of the same slave gateway may be the same or may be different. Whether the first GEM frame is the GEM frame communicated between the ONUs or the GEM frame communicated between the ONU and the OLT is distinguished according to the second identification. In response to that the values of the first port identification and the second port identification of the same gateway are the same, resources of port identifications are saved.

In some implementations, in response to that the first identification is not encapsulated into the first GEM frame, after receiving the Ethernet frame sent by the first terminal, and before encapsulating the first port identification of the first slave gateway and the Ethernet frame into the first GEM frame, the communication method further includes: acquiring the first port identification of the first slave gateway.

In some implementations, acquiring the first port identification of the first slave gateway includes: acquiring the device identification of the second slave gateway according to the target MAC address in the Ethernet frame, with the second slave gateway being the slave gateway connected with the second terminal to which the target MAC address belongs; and acquiring the first port identification of the first slave gateway according to the device identification of the second slave gateway.

In some implementations, acquiring the first port identification of the first slave gateway according to the device identification of the second slave gateway includes: acquiring first configuration information in which a peer-to-peer device identification is the device identification of the second slave gateway; acquiring a port identification in the first configuration information as the first port identification of the first slave gateway.

In some implementations, in response to that the first identification is encapsulated into the first GEM frame, and the first identification is the UNI Node ID of the first slave gateway or the UNI Node ID of the second slave gateway, after receiving the Ethernet frame sent by the first terminal, and before encapsulating the first port identification and the first identification of the first slave gateway, and the Ethernet frame into the first GEM frame, the communication method further includes: acquiring the first port identification and the first identification of the first slave gateway.

In some implementations, acquiring the first port identification and the first identification of the first slave gateway includes: acquiring the device identification of the second slave gateway according to the target MAC address in the Ethernet frame, with the second slave gateway being the slave gateway connected with the second terminal to which the target MAC address belongs; and acquiring the first port identification and the first identification of the first slave gateway according to the device identification of the second slave gateway.

In some implementations, acquiring the device identification of the second slave gateway according to the target MAC address in the Ethernet frame includes: searching for a device identification corresponding to the target MAC address in a pre-stored first mapping relation between device identifications of slave gateways and MAC addresses, and taking the searched device identification as the device identification of the second slave gateway.

In some implementations, the device identification of any slave gateway may be an ONU ID.

In some implementations, for each slave gateway, such as the first slave gateway and the second slave gateway mentioned in the present application, after any terminal (such as the first terminal and the second terminal mentioned in the present application) connected to the slave gateway accesses the slave gateway, the slave gateway may learn a MAC address of the terminal, and further store a first mapping relation between the learned MAC address and the device identification of the slave gateway.

In some implementations, before searching for the device identification corresponding to the target MAC address, the communication method further includes: acquiring a second mapping relation shared by other slave gateways, and storing or updating the first mapping relation according to the second mapping relation.

In some implementations, the second mapping relation is a mapping relation between MAC addresses of terminals learned and stored by other slave gateways connected with the terminals, and device identifications of the other slave gateways.

In some implementations, the other slave gateways may share the second mapping relation in multiple ways, for example, the other slave gateways may share the second mapping relation after the other slave gateways learning the MAC addresses of the terminals connected with the other slave gateways, specifically, the second mapping relation may be shared to the master gateway, or the second mapping relation may be shared between different slave gateways.

In some implementations, acquiring the device identification of the second slave gateway according to the target MAC address in the Ethernet frame includes: sending an acquisition request to the master gateway, with the acquisition request being configured for acquiring a first mapping relation corresponding to the target MAC address, and the first mapping relation being a mapping relation between device identifications of slave gateways and MAC addresses; receiving the first mapping relation corresponding to the target MAC address sent by the master gateway, and acquiring the device identification in the first mapping relation corresponding to the target MAC address.

In some implementations, the acquisition request includes the target MAC address.

In some implementations, acquiring the device identification of the second slave gateway according to the target MAC address in the Ethernet frame includes: sending an acquisition request to other gateways, with the acquisition request being configured for acquiring a first mapping relation corresponding to the target MAC address, and the first mapping relation being a mapping relation between device identifications of slave gateways and MAC addresses; receiving the first mapping relation corresponding to the target MAC address sent by the other gateways, and acquiring the device identification in the first mapping relation corresponding to the target MAC address.

In some implementations, acquiring the first port identification and the first identification of the first slave gateway according to the device identification of the second slave gateway includes: acquiring first configuration information in which a peer-to-peer device identification is the device identification of the second slave gateway; acquiring a port identification in the first configuration information as the first port identification of the first slave gateway; in response to that the first identification is the UNI Node ID of the first slave gateway, acquiring a UNI Node ID in the first configuration information as the first identification; and in response to that the first identification is the UNI Node ID of the second slave gateway, acquiring the first identification according to the UNI Node ID in the first configuration information.

For example, two ONUs performing communication therebetween are denoted by 0 and 1 respectively, and in response to that the UNI Node ID in the first configuration information is 0, it is determined that the first identification is 1; in response to that the UNI Node ID in the first configuration information is 1, it is determined that the first identification is 0.

In some implementations, the peer-to-peer device identification may be a peer-to-peer ONU ID.

In some implementations, any communication between any two slave gateways corresponds to one piece of configuration information, i.e., a GEM Port Network Connection Terminal Point (CTP) Maintenance Entity (ME), the GEM Port Network CTP ME is associated with a Transmission Container (T-CONT) and a GEM IW TP ME.

In some implementations, the GEM Port Network CTP ME includes following attributes of Managed Entity ID, Port ID, T-CONT Pointer, Direction, and peer-to-peer device identification.

The attribute of Managed Entity ID is configured to uniquely identify an instance of the GEM Port Network CTP ME.

The attribute of Port ID is configured to identify a port ID of a GEM Port associated with the GEM Port Network CTP ME.

The attribute of T-CONT Pointer points to a T-CONT instance.

The attribute of Direction describes whether the GEM port is configured for UNI-to-ANI, ANI-to-UNI, bidirectional connection, or bidirectional UNI-to-UNI. For example, in response to that a value of the attribute is 1, it indicates that the GEM port is configured for UNI-to-ANI; in response to that the value of the attribute is 2, it indicates that the GEM port is configured for ANI-to-UNI; in response to that the value of the attribute is 3, it indicates that the GEM port is configured for bidirectional connection; and in response to that the value of the attribute is 4, it indicates that the GEM port is configured for bidirectional UNI-to-UNI.

The attribute of peer-to-peer device identification is configured to identify a device identification of another slave gateway in the communication.

UNI-to-UNI is a type of communication newly introduced in the present application, and indicates communication between the ONUs.

The UNI Node ID is an attribute newly introduced in the present application.

The peer-to-peer device identification is an attribute newly introduced in the present application.

In some implementations, the GEM Port Network CTP ME further includes an attribute of associated port identification, configured to describe a first port identification of a slave gateway at which an ONU communicating with the master gateway is located.

In some implementations, the GEM Port Network CTP ME further includes an UNI Node ID indicating both ends performing communication therebetween.

In some implementations, in response to that the first identification is the device identification of the second slave gateway, after receiving the Ethernet frame sent by the first terminal, and before encapsulating the first port identification and the first identification of the first slave gateway, and the Ethernet frame into the first GEM frame, the communication method further includes: acquiring the device identification of the second slave gateway according to the target MAC address; and acquiring the first port identification of the first slave gateway according to the device identification of the second slave gateway.

In some implementations, acquiring the first port identification of the first slave gateway according to the device identification of the second slave gateway includes: acquiring first configuration information in which a peer-to-peer device identification is the device identification of the second slave gateway; acquiring a port identification in the first configuration information as the first port identification of the first slave gateway.

In some implementations, in response to that the device identification of the second slave gateway is not acquired, the communication method further includes: encapsulating a port identification for upstream broadcast and the Ethernet frame into a second GEM frame, and sending the second GEM frame to the master gateway.

In some implementations, encapsulating the port identification for the upstream broadcast and the Ethernet frame into the second GEM frame includes: encapsulating the port identification for the uplink broadcast into a field of port identification in a GEM frame header of the second GEM frame, and encapsulating the Ethernet frame into a payload domain of the second GEM frame.

According to the communication method provided in the embodiments of the present application, the communication between the ONUs is performed based on the port identification for the communication between the ONUs, rather than the port identification for the communication between the ONU and the OLT, so that the first GEM frame is not to be parsed during being forwarded by the master gateway, i.e., service forwarding between the ONUs can be realized at a PON protocol layer of the master gateway, without through an Ethernet layer or an IP layer of the master gateway, thereby resulting in a reduced time delay.

Fig. 4 is a flowchart of a communication method applied to a master gateway according to embodiments of the present application.

In a second aspect, referring to Fig. 4, embodiments of the present application provide a communication method applied to a master gateway, including following operations 400 and 401.

At operation 400, receiving a first GEM frame sent by a first slave gateway, with the first GEM frame including a port identification.

In some implementations, as shown in Fig. 3, the first GEM frame includes a GEM frame header and a payload domain of the GEM frame.

In some implementations, the GEM frame header includes fields of: PLI, Key Index, Port ID, Options, LF, and HEC.

In some implementations, the Port ID may be filled with a first port identification of a slave gateway, or a second port identification of the slave gateway. The first port identification is a port identification for communication between the ONUs, and the second port identification is a port identification for communication between the ONU and an OLT.

In some implementations, the LF is configured to indicate whether the last fragment or not.

In some implementations, the first GEM frame further includes: a first identification.

In some implementations, the first identification may be a UNI Node ID of the first slave gateway, or may be a UNI Node ID of a second slave gateway; the second slave gateway is a slave gateway connected with a second terminal, and the second terminal is a terminal to which a target MAC address in the Ethernet frame belongs.

In some implementations, the first identification may be a device identification of the second slave gateway.

In some implementations, the UNI Node ID is configured to identify two ends performing communication therebetween. For example, two ONUs performing communication therebetween are denoted by 0 and 1 respectively, e.g., ONU1 is denoted by 1 and ONU2 is denoted by 0.

In some implementations, the GEM frame header of the first GEM frame includes: the port identification and the first identification.

In some implementations, the field of Port ID in the GEM frame header includes the port identification, the field of Options in the GEM frame header includes the first identification.

In some implementations, in response to that the first identification is the device identification of the second slave gateway, at least one bit of the field of Options in the GEM frame header includes the first identification.

In some implementations, in response to that the first identification is the UNI Node ID of the first slave gateway or the first identification is the UNI Node ID of the second slave gateway, a certain bit of the field of Options in the GEM frame header includes the first identification.

In some implementations, a highest bit in the field of Options includes the first identification.

In some implementations, the first GEM frame further includes: a second identification configured to indicate whether the first GEM frame is a GEM frame communicated between the ONUs or a GEM frame communicated between the ONU and the OLT.

In some implementations, the GEM frame header of the first GEM frame further includes: the second identification.

In some implementations, the field of Options in the GEM frame header further includes: the second identification.

In some implementations, the second identification is located in a bit, except the bit occupied by the first identification, in the field of Options.

In some implementations, in response to that the first identification is the UNI Node ID of the first slave gateway, or the first identification is the UNI Node ID of the second slave gateway, the second identification is located in other bits except the highest bit in the field of Options.

At operation 401, in response to determining that the port identification in the first GEM frame is a port identification for communication between ONUs, sending the first GEM frame to all slave gateways.

In some implementations, determining that the port identification in the first GEM frame is the port identification for the communication between the ONUs includes: acquiring second configuration information in which a port identification is the port identification in the first GEM frame; determining that a peer-to-peer device identification in the second configuration information is not a special value.

In some implementations, in response to determining that the peer-to-peer device identification in the second configuration information is the special value, it is determined that the port identification in the first GEM frame is the port identification for communication between the ONU and the OLT.

In some implementations, any communication between two slave gateways corresponds to one piece of configuration information, i.e., a GEM Port Network CTP ME, the GEM Port Network CTP ME is associated with a T-CONT and a GEM IW TP ME.

In some implementations, the GEM Port Network CTP ME includes following attributes of Managed Entity ID, Port ID, T-CONT Pointer, Direction and peer-to-peer device identification.

The attribute of Managed Entity ID is configured to uniquely identify an instance of the GEM Port Network CTP ME.

The attribute of Port ID is configured to identify a port ID of a GEM Port associated with the GEM Port Network CTP ME.

The attribute of T-CONT Pointer points to a T-CONT instance.

The attribute of Direction describes whether the GEM port is for UNI-to-ANI, ANI-to-UNI, bidirectional connection, or bidirectional UNI-to-UNI. For example, in response to that a value of the attribute is 1, it indicates that the GEM port is for UNI-to-ANI; in response to that the value of the attribute is 2, it indicates that the GEM port is for ANI-to-UNI; in response to that the value of the attribute is 3, it indicates that the GEM port is for bidirectional connection; and in response to that the value of the attribute is 4, it indicates that the GEM port is for bidirectional UNI-to-UNI.

The attribute of peer-to-peer device identification is configured to identify a device identification of another slave gateway in the communication, and in response to that a value of the attribute is a special value, it indicates that the ONU communicates with the OLT.

UNI-to-UNI is a type of communication newly introduced in the present application, and indicates communication between the ONUs.

The peer-to-peer device identification is an attribute newly introduced in the present application.

In some implementations, the GEM Port Network CTP ME further includes an attribute of associated port identification, configured to describe a first port identification of a slave gateway at which an ONU communicating with the master gateway is located.

In some implementations, the GEM Port Network CTP ME further includes an UNI Node ID indicating two ends performing communication therebetween.

The UNI Node ID is an attribute newly introduced in the present application.

In some implementations, determining that the port identification in the first GEM frame is the port identification for the communication between the ONUs includes: determining that there is third configuration information in which a port identification is the port identification in the first GEM frame and a peer-to-peer device identification is the first identification in the first GEM frame.

In some implementations, in response to determining that there is no the third configuration information, it is determined that the port identification in the first GEM frame is a port identification for communication between the ONU and the OLT.

In some implementations, determining that the port identification in the first GEM frame is the port identification for the communication between the ONUs includes: acquiring the second identification in the first GEM frame; determining that the second identification is configured to indicate that the first GEM frame is the GEM frame communicated between the ONUs.

In some implementations, in response to that values of first port identifications allocated for slave gateways at which two ONUs performing communication therebetween are located are different, before sending the first GEM frame, the communication method further includes: acquiring a first port identification of a second slave gateway; and replacing the port identification in the first GEM frame with the first port identification of the second slave gateway to obtain an updated first GEM frame. Accordingly, sending the first GEM frame to all slave gateways includes: sending the updated first GEM frame to all slave gateways.

In some implementations, in response to that values of first port identifications allocated for slave gateways at which two ONUs performing communication therebetween are located are different, the first GEM frame may also be directly sent, and the port identification in the first GEM frame is not replaced with the first port identification of the second slave gateway to obtain the updated first GEM frame.

In some implementations, acquiring the first port identification of the second slave gateway includes: acquiring second configuration information in which a port identification is the port identification in the first GEM frame; and acquiring an associated port identification in the second configuration information as the first port identification of the second slave gateway.

In some implementations, acquiring the first port identification of the second slave gateway includes: acquiring the third configuration information in which the port identification is the port identification in the first GEM frame and the peer-to-peer device identification is the first identification in the first GEM frame; and acquiring an associated port identification in the third configuration information as the first port identification of the second slave gateway.

In some implementations, before receiving the first GEM frame sent by the first slave gateway, the communication method further includes: receiving an acquisition request sent by the first slave gateway, with the acquisition request being configured for acquiring a first mapping relation corresponding to the target MAC address, and the first mapping relation being a mapping relation between MAC addresses and device identifications of slave gateways; searching for the first mapping relation corresponding to the target MAC address in pre-stored first mapping relations; and sending the first mapping relation corresponding to the target MAC address to the first slave gateway.

In some implementations, the acquisition request includes the target MAC address.

In some implementations, before receiving the acquisition request sent by the first slave gateway, the communication method further includes: receiving a second mapping relation shared by the first slave gateway or other slave gateways, and storing or updating the first mapping relation according to the second mapping relation.

In some implementations, the second mapping relation is a mapping relation between MAC addresses of terminals learned and stored by slave gateways connected with the slave gateways, and device identifications of the slave gateways.

In some implementations, before receiving the first GEM frame sent by the first slave gateway, the communication method further includes: receiving a second mapping relation shared by the first slave gateway or other slave gateways, and sending the second mapping relation to all slave gateways or other slave gateways except the slave gateway sharing the second mapping relation.

In some implementations, the communication method further includes: receiving a second GEM frame sent by the first slave gateway, and in response to determining that a port identification in the second GEM frame is configured for uplink broadcast, broadcasting the second GEM frame to an FTTH OLT and all slave gateways.

Fig. 5 is a flowchart of a communication method applied to a third slave gateway according to embodiments of the present application.

In a third aspect, referring to Fig. 5, embodiments of the present application provide a communication method applied to a third slave gateway, including following operations 500 and 501.

At operation 500, receiving a first GEM frame sent by a master gateway, with the first GEM frame including a port identification.

In some implementations, as shown in Fig. 3, the GEM frame includes a GEM frame header and a payload domain of the GEM frame.

In some implementations, the GEM frame header includes fields of: PLI, Key Index, Port ID, Options, LF, and HEC.

In some implementations, the Port ID may be filled with a first port identification of a slave gateway, or a second port identification of the slave gateway. The first port identification is a port identification for communication between the ONUs, and the second port identification is a port identification for communication between the ONU and an OLT.

In some implementations, the LF is configured to indicate whether the last fragment or not.

In some implementations, the first GEM frame further includes: a first identification.

In some implementations, the first identification may be a UNI Node ID of the first slave gateway, or may be a UNI Node ID of a second slave gateway; the second slave gateway is a slave gateway connected with a second terminal, and the second terminal is a terminal to which a target MAC address in the Ethernet frame belongs.

In some implementations, the first identification may be a device identification of the second slave gateway.

In some implementations, the UNI Node ID is configured to identify two ends performing communication therebetween. For example, two ONUs performing communication therebetween are denoted by 0 and 1 respectively, e.g., ONU1 is denoted by 1 and ONU2 is denoted by 0.

In some implementations, the GEM frame header of the first GEM frame includes: the port identification and the first identification.

In some implementations, the filed of Port ID in the GEM frame header includes the port identification, and the field of Options in the GEM frame header includes the first identification.

In some implementations, in response to that the first identification is the device identification of the second slave gateway, at least one bit of the field of Options in the GEM frame header includes the first identification.

In some implementations, in response to that the first identification is the UNI Node ID of the first slave gateway or the first identification is the UNI Node ID of the second slave gateway, a certain bit of the field of Options in the GEM frame header includes the first identification. For example, the highest bit of the field of Options includes the first identification.

In some implementations, the first GEM frame further includes: a second identification configured to indicate whether the first GEM frame is a GEM frame communicated between the ONUs or a GEM frame communicated between the ONU and the OLT.

In some implementations, the GEM frame header of the first GEM frame further includes: the second identification.

In some implementations, the field of Options in the GEM frame header further includes: the second identification.

In some implementations, the second identification is located in a bit, except the bit occupied by the first identification, in the field of Options.

In some implementations, in response to that the first identification is the UNI Node ID of the first slave gateway or the first identification is the UNI Node ID of the second slave gateway, the second identification is located in other bits except the highest bit in the field of Options.

At operation 501, determining whether to perform corresponding processing on the first GEM frame according to the port identification in the first GEM frame.

In some implementations, determining whether to perform corresponding processing on the first GEM frame according to the port identification in the first GEM frame includes: determining whether to perform corresponding processing on the first GEM frame according to whether the port identification in the first GEM frame is a first port identification of the third slave gateway.

In some implementations, determining whether to perform corresponding processing on the first GEM frame according to whether the port identification in the first GEM frame is the first port identification of the third slave gateway includes at least one of: in response to that the port identification in the first GEM frame is the first port identification of the third slave gateway, determining to perform corresponding processing on the first GEM frame; in response to that the port identification in the first GEM frame is not the first port identification of the third slave gateway, determining not to perform corresponding processing on the first GEM frame.

In some implementations, determining whether to perform corresponding processing on the first GEM frame according to the port identification in the first GEM frame includes: determining whether to perform corresponding processing on the first GEM frame according to whether there is fourth configuration information in which an associated port identification is the port identification in the first GEM frame.

In some implementations, determining whether to perform corresponding processing on the first GEM frame according to whether there is the fourth configuration information in which the associated port identification is the port identification in the first GEM frame includes at least one of: in response to that there is the fourth configuration information, determining to perform corresponding processing on the first GEM frame; in response to that there is no the fourth configuration information, determining not to perform corresponding processing on the first GEM frame.

In some implementations, determining whether to perform corresponding processing on the first GEM frame according to the port identification in the first GEM frame includes: determining whether to perform corresponding processing on the first GEM frame according to the port identification in the first GEM frame and the first identification in the first GEM frame.

In some implementations, in response to that the first identification is the UNI Node ID of the first slave gateway or the first identification is the UNI Node **ID** of the second slave gateway, determining whether to perform corresponding processing on the first GEM frame according to the port identification in the first GEM frame and the first identification in the first GEM frame includes: determining whether to perform corresponding processing on the first GEM frame according to whether the port identification in the first GEM frame is a first port identification of the third slave gateway and whether the first identification in the first GEM frame is a UNI Node ID of the third slave gateway.

In some implementations, in response to that the first identification is the UNI Node ID of the first slave gateway, determining whether to perform corresponding processing on the first GEM frame according to whether the port identification in the first GEM frame is the first port identification of the third slave gateway and whether the first identification in the first GEM frame is the UNI Node ID of the third slave gateway includes at least one of: in response to that the port identification in the first GEM frame is the first port identification of the third slave gateway, and the first identification in the first GEM frame is not the UNI Node ID of the third slave gateway, determining to perform corresponding processing on the first GEM frame; in response to that the port identification in the first GEM frame is not the first port identification of the third slave gateway, or the first identification in the first GEM frame is the UNI Node ID of the third slave gateway, determining not to perform corresponding processing on the first GEM frame.

In some implementations, in response to that the first identification is the UNI Node ID of the second slave gateway, determining whether to perform corresponding processing on the first GEM frame according to whether the port identification in the first GEM frame is the first port identification of the third slave gateway and whether the first identification in the first GEM frame is the UNI Node ID of the third slave gateway includes at least one of: in response to that the port identification in the first GEM frame is the first port identification of the third slave gateway, and the first identification in the first GEM frame is the UNI Node ID of the third slave gateway, determining to perform corresponding processing on the first GEM frame; in response to that the port identification in the first GEM frame is not the first port identification of the third slave gateway, or the first identification in the first GEM frame is not the UNI Node **ID** of the third slave gateway, determining not to perform corresponding processing on the first GEM frame.

In some implementations, in response to that the first identification is the device identification of the second slave gateway, determining whether to perform corresponding processing on the first GEM frame according to the port identification in the first GEM frame and the first identification in the first GEM frame includes: determining whether to perform corresponding processing on the first GEM frame according to whether the port identification in the first GEM frame is a first port identification of the third slave gateway and whether the first identification in the first GEM frame is a device identification of the third slave gateway.

In some implementations, determining whether to perform corresponding processing on the first GEM frame according to whether the port identification in the first GEM frame is the first port identification of the third slave gateway and whether the first identification in the first GEM frame is the device identification of the third slave gateway includes at least one of: in response to that the port identification in the first GEM frame is the first port identification of the third slave gateway, and the first identification in the first GEM frame is the device identification of the third slave gateway, determining to perform corresponding processing on the first GEM frame; in response to that the port identification in the first GEM frame is not the first port identification of the third slave gateway, or the first identification in the first GEM frame is not the device identification of the third slave gateway, determining not to perform corresponding processing on the first GEM frame.

In some implementations, determining whether to perform corresponding processing on the first GEM frame according to the port identification in the first GEM frame and the first identification in the first GEM frame includes: determining whether to perform corresponding processing on the first GEM frame according to whether there is fourth configuration information in which an associated port identification is the port identification in the first GEM frame and whether the first identification in the first GEM frame is a device identification of the third slave gateway.

In some implementations, determining whether to perform corresponding processing on the first GEM frame according to whether there is the fourth configuration information in which the associated port identification is the port identification in the first GEM frame and whether the first identification in the first GEM frame is the device identification of the third slave gateway includes at least one of: in response to that there is the fourth configuration information and the first identification in the first GEM frame is the device identification of the third slave gateway, determining to perform corresponding processing on the first GEM frame; in response to that there is no the fourth configuration information, or the first identification in the first GEM frame is not the device identification of the third slave gateway, determining not to perform corresponding processing on the first GEM frame.

In some implementations, the corresponding processing performed on the first GEM frame may be any processing performed after receiving the first GEM frame, for example, parsing the first GEM frame to acquire the Ethernet frame.

In some implementations, determining not to perform corresponding processing on the first GEM frame includes: discarding the first GEM frame.

In some implementations, before receiving the first GEM frame sent by the master gateway, the communication method further includes: receiving an acquisition request sent by the first slave gateway, with the acquisition request being configured for acquiring a first mapping relation corresponding to the target MAC address, and the first mapping relation being a mapping relation between MAC addresses and device identifications of slave gateways; searching for the first mapping relation corresponding to the target MAC address in pre-stored first mapping relations; and sending the first mapping relation corresponding to the target MAC address to the first slave gateway.

In some implementations, before receiving the first GEM frame sent by the master gateway, the communication method further includes: receiving a second mapping relation shared by the first slave gateway or other slave gateways, and storing or updating the first mapping relation according to the second mapping relation.

In some implementations, the second mapping relation is a mapping relation between MAC addresses of terminals learned and stored by slave gateways connected with the terminals, and device identifications of the slave gateways.

In some implementations, the communication method further includes: receiving a second GEM frame broadcasted by the master gateway.

In order to illustrate the communication method of the present application more clearly, a specific implementation process of the communication method provided in the present application is described below through specific examples, the listed examples are not used to limit the scope of the embodiments of the present application.

### Example 1

The Example 1 describes, after an interaction between ONUs starts, a procedure for realizing communication between the ONUs in response to that a slave gateway does not learn a MAC address of a terminal connected to the slave gateway and a slave gateway connected to a transmitting terminal does not acquire a device identification of a slave gateway connected with a receiving terminal.

A master gateway sends configuration information to each slave gateway through a GEM Port Network CTP ME, a port identification in the configuration information is a port identification for uplink broadcast, a communication type in the configuration information is UNI-to-ANI, i.e., a value of an attribute of Direction is 1.

After receiving an Ethernet frame sent by a terminal connected to the slave gateway, the slave gateway encapsulates the Ethernet frame into a payload domain of a second GEM frame, encapsulates the port identification of the slave gateway for uplink broadcast into a field of port identification in a GEM frame header of the second GEM frame, and sends the second GEM frame to the master gateway.

The master gateway receives the second GEM frame, and in response to determining that the port identification in the second GEM frame is configured for uplink broadcast, broadcasts the second GEM frame to an FTTH OLT and all slave gateways.

The slave gateway receives the second GEM frame.

### Example 2

The Example 2 describes a procedure in which a slave gateway learns a MAC address of a terminal connected to the slave gateway, and shares a mapping relation between the MAC address and a device identification of the slave gateway to a master gateway.

Assuming that there are three slave gateways, connected with the master gateway, including slave gateway 1, slave gateway 2, and slave gateway 3, there are two terminals connected with the slave gateway 1, including terminal 1, and terminal 2; there are three terminals connected with the slave gateway 2, including terminal 3, terminal 4, and terminal 5; and there are two terminals connected with the slave gateway 3, including terminal 6, and terminal 7.

After the terminal 1 and the terminal 2 access the slave gateway 1, the slave gateway 1 learns a MAC address of the terminal 1 as MAC address 1, and learns a MAC address of the terminal 2 as MAC address 2. The slave gateway 1 locally stores a mapping relation between the MAC address 1 and a device identification of the slave gateway 1, and a mapping relation between the MAC address 2 and the device identification of the slave gateway 1, and shares stored mapping relations as a second mapping relation to the master gateway, and the master gateway stores or updates a local first mapping relation according to the second mapping relation shared by the slave gateway 1.

After the terminal 3, the terminal 4 and the terminal 2 access the slave gateway 2, the slave gateway 2 learns a MAC address of the terminal 3 as MAC address 3, learns a MAC address of the terminal 4 as MAC address 4, and learns a MAC address of the terminal 5 as MAC address 5. The slave gateway 2 locally stores a mapping relation between the MAC address 3 and a device identification of the slave gateway 2, a mapping relation between the MAC address 4 and the device identification of the slave gateway 2, and a mapping relation between the MAC address 5 and the device identification of the slave gateway 2, and shares stored mapping relations as a second mapping relation to the master gateway, and the master gateway stores or updates a local first mapping relation according to the second mapping relation shared by the slave gateway 2.

After the terminal 6 and the terminal 7 access the slave gateway 3, the slave gateway 3 learns a MAC address of the terminal 6 as MAC address 6, and learns a MAC address of the terminal 7 as MAC address 7. The slave gateway 3 locally stores a mapping relation between the MAC address 6 and a device identification of the slave gateway 3, and a mapping relation between the MAC address 7 and the device identification of the slave gateway 3, and shares stored mapping relations as a second mapping relation to the master gateway, and the master gateway stores or updates a local first mapping relation according to the second mapping relation shared by the slave gateway 3.

### Example 3

The Example 3 describes a communication procedure between ONU1 and ONU2 in response to that first port identifications are allocated to FTTR ONU1 and FTTR ONU2 performing communication therebetween, and a value of the first port identification allocated to the ONU1 is the same as a value of the first port identification allocated to the ONU2.

In the example, the first port identifications are port identifications for communication between the ONUs, the value of the first port identification of the ONU1 is different from a value of a second port identification of the ONU1, the value of the first port identification of the ONU2 is different from a value of a second port identification of the ONU2, the second port identifications are port identifications for communication between the ONUs and the OLT.

In the example, a master gateway sends configuration information to the slave gateway 1 at which the ONU1 is located, through a GEM Port Network CTP ME, and in the configuration information, a port identification is an allocated first port identification Port-ID1, and a communication type is ONU-to-ONU or UNI-to-UNI, i.e., a value of an attribute of Direction is 4, a UNI Node ID is 0, and a peer-to-peer device identification is a device identification of the slave gateway 2 at which the ONU2 is located.

In the example, the master gateway sends configuration information to the slave gateway 2 at which the ONU2 is located, through the GEM Port Network CTP ME, and in the configuration information, a port identification is the allocated first port identification Port-ID1, and a communication type is ONU-to-ONU or UNI-to-UNI, i.e., a value of an attribute of Direction is 4, a UNI Node ID is 1, and a peer-to-peer device identification is a device identification of the slave gateway 1 at which the ONU1 is located.

A procedure of the ONU1 initiating a communication to the ONU2 includes as follows.

The slave gateway 1 at which the ONU1 is located receives an Ethernet frame sent by a terminal 1.

The slave gateway 1 sends an acquisition request to the master gateway, with the acquisition request including a target MAC address in the Ethernet frame.

The master gateway searches for a first mapping relation corresponding to the target MAC address in pre-stored first mapping relations, and sends the first mapping relation corresponding to the target MAC address to the slave gateway 1.

The slave gateway 1 receives the first mapping relation, corresponding to the target MAC address, sent by the master gateway, and acquires a device identification in the first mapping relation corresponding to the target MAC address as the device identification of the slave gateway 2.

The slave gateway 1 acquires the port identification Port-ID1 in the configuration information, in which the peer-to-peer device identification is the device identification of the slave gateway 2, as the first port identification of the slave gateway 1, acquires a UNI Node ID in the configuration information in which the peer-to-peer device identification is the device identification of the slave gateway 2.

The slave gateway 1 encapsulates the Ethernet frame into a payload domain of a first GEM frame, encapsulates the first port identification of the slave gateway 1 into a field of port identification in a GEM frame header of the first GEM frame, encapsulates the UNI Node ID into a highest bit in a field of Options in the GEM frame header of the first GEM frame, and sends the encapsulated first GEM frame to the master gateway.

The master gateway receives the first GEM frame, acquires the configuration information in which the port identification is the port identification in the first GEM frame, and in response to determining that a peer-to-peer device identification in the acquired configuration information is not a special value, determines that the port identification in the first GEM frame is the port identification for the communication between the ONUs, and broadcasts the first GEM frame to all slave gateways.

The slave gateway 2 receives the first GEM frame, and in response to that the port identification in the first GEM frame is the first port identification of the slave gateway 2, and the UNI Node ID in the first GEM frame is not the UNI Node ID of the slave gateway 2, receives the first GEM frame and parses the first GEM frame to obtain an Ethernet frame, and sends the Ethernet frame to a terminal 2.

### Example 4

The Example 4 describes a communication procedure between ONU1 and ONU2 in response to that first port identifications are allocated to FTTR ONU1 and FTTR ONU2 performing communication therebetween, and a value of the first port identification allocated to the ONU1 is different from a value of the first port identification allocated to the ONU2.

In the example, the first port identifications are port identifications for communication between the ONUs, the value of the first port identification of the ONU1 is different from a value of a second port identification of the ONU1, the value of the first port identification of the ONU2 is different from a value of a second port identification of the ONU2, the second port identifications are port identifications for communication between the ONUs and the OLT.

In the example, a master gateway sends configuration information to the slave gateway 1 at which the ONU1 is located, through a GEM Port Network CTP ME, and in the configuration information, a port identification is an allocated first port identification Port-ID1, and a communication type is ONU-to-ONU or UNI-to-UNI, i.e., a value of an attribute of Direction is 4, and a peer-to-peer device identification is a device identification of the slave gateway 2 at which the ONU2 is located, an associated port identification is a first port identification Port-ID2 allocated to the slave gateway 2 at which the ONU2 is located.

In the example, the master gateway sends configuration information to the slave gateway 2 at which the ONU2 is located, through the GEM Port Network CTP ME, and in the configuration information, a port identification is the allocated first port identification Port-ID2, and a communication type is ONU-to-ONU or UNI-to-UNI, i.e., a value of an attribute of Direction is 4, and a peer-to-peer device identification is a device identification of the slave gateway 1 at which the ONU1 is located, an associated port identification is the first port identification Port-ID1 allocated to the slave gateway 1 at which the ONU1 is located.

A procedure of the ONU1 initiating a communication to the ONU2 includes as follows.

The slave gateway 1 at which the ONU1 is located receives an Ethernet frame sent by a terminal 1.

The slave gateway 1 sends an acquisition request to the master gateway, with the acquisition request including a target MAC address in the Ethernet frame.

The master gateway searches for a first mapping relation corresponding to the target MAC address in pre-stored first mapping relations, and sends the first mapping relation corresponding to the target MAC address to the slave gateway 1.

The slave gateway 1 receives the first mapping relation, corresponding to the target MAC address, sent by the master gateway, and acquires a device identification in the first mapping relation corresponding to the target MAC address as the device identification of the slave gateway 2.

The slave gateway 1 acquires the port identification Port-ID1 in the configuration information, in which the peer-to-peer device identification is the device identification of the slave gateway 2, as the first port identification of the slave gateway 1.

The slave gateway 1 encapsulates the Ethernet frame into a payload domain of a first GEM frame, encapsulates the first port identification of the slave gateway 1 into a field of port identification in a GEM frame header of the first GEM frame, encapsulates the device identification of the slave gateway 2 as a first identification into a field of Options in the GEM frame header of the first GEM frame, and sends the encapsulated first GEM frame to the master gateway.

The master gateway receives the first GEM frame, and in response to determining that there is configuration information in which a port identification is the port identification in the first GEM frame and the peer-to-peer device identification is the device identification of the slave gateway 2, determines that the port identification in the first GEM frame is the port identification for communication between the ONUs.

The master gateway acquires an associated port identification in the configuration information, in which the port identification is the port identification in the first GEM frame and the peer-to-peer device identification is the device identification of the slave gateway 2, as the first port identification Port-ID2 of the slave gateway 2, replaces the port identification in the first GEM frame with the first port identification Port-ID2 of the slave gateway 2 to acquire an updated first GEM frame, and broadcasts the updated first GEM frame to all slave gateways.

The slave gateway 2 receives the updated first GEM frame, and in response to that a port identification in the updated first GEM frame is the first port identification of the slave gateway 2, and a first identification in the updated first GEM frame is the device identification of the slave gateway 2, receives the updated first GEM frame and parses the updated first GEM frame to obtain an Ethernet frame, and sends the Ethernet frame to a terminal 2.

### Example 5

The Example 5 describes a communication procedure between ONU1 and ONU2 in response to that first port identifications are allocated to FTTR ONU1 and FTTR ONU2 performing communication therebetween, and a value of the first port identification allocated to the ONU1 is different from a value of the first port identification allocated to the ONU2.

In the example, the first port identifications are port identifications for communication between the ONUs, the value of the first port identification of the ONU1 is different from a value of a second port identification of the ONU1, the value of the first port identification of the ONU2 is different from a value of a second port identification of the ONU2, the second port identifications are port identifications for communication between the ONUs and the OLT.

In the example, a master gateway sends configuration information to the slave gateway 1 at which the ONU1 is located, through a GEM Port Network CTP ME, and in the configuration information, a port identification is an allocated first port identification Port-ID1, and a communication type is ONU-to-ONU or UNI-to-UNI, i.e., a value of an attribute of Direction is 4, and a peer-to-peer device identification is a device identification of the slave gateway 2 at which the ONU2 is located, an associated port identification is a first port identification Port-ID2 allocated to the slave gateway 2 at which the ONU2 is located.

In the example, the master gateway sends configuration information to the slave gateway 2 at which the ONU2 is located, through the GEM Port Network CTP ME, and in the configuration information, a port identification is the allocated first port identification Port-ID2, and a communication type is ONU-to-ONU or UNI-to-UNI, i.e., a value of an attribute of Direction is 4, and a peer-to-peer device identification is a device identification of the slave gateway 1 at which the ONU1 is located, an associated port identification is the first port identification Port-ID1 allocated to the slave gateway 1 at which the ONU1 is located.

A procedure of the ONU1 initiating a communication to the ONU2 includes as follows.

The slave gateway 1 at which the ONU1 is located receives an Ethernet frame sent by a terminal 1.

The slave gateway 1 sends an acquisition request to the master gateway, with the acquisition request including a target MAC address in the Ethernet frame.

The master gateway searches for a first mapping relation corresponding to the target MAC address in pre-stored first mapping relations, and sends the first mapping relation corresponding to the target MAC address to the slave gateway 1.

The slave gateway 1 receives the first mapping relation corresponding to the target MAC address sent by the master gateway, and acquires a device identification in the first mapping relation corresponding to the target MAC address as the device identification of the slave gateway 2.

The slave gateway 1 acquires the port identification Port-ID1 in the configuration information in which the peer-to-peer device identification is the device identification of the slave gateway 2 as the first port identification of the slave gateway 1.

The slave gateway 1 encapsulates the Ethernet frame into a payload domain of a first GEM frame, encapsulates the first port identification of the slave gateway 1 into a field of port identification in a GEM frame header of the first GEM frame, encapsulates the device identification of the slave gateway 2 as a first identification into a field of Options in the GEM frame header of the first GEM frame, and sends the encapsulated first GEM frame to the master gateway.

The master gateway receives the first GEM frame, and in response to determining that there is configuration information in which a port identification is the port identification in the first GEM frame and the peer-to-peer device identification is the device identification of the slave gateway 2, determines that the port identification in the first GEM frame is the port identification for communication between the ONUs, and broadcasts the first GEM frame to all slave gateways.

The slave gateway 2 receives the first GEM frame, and in response to that the port identification in the first GEM frame is the first port identification of the slave gateway 2, and the first identification in the first GEM frame is the device identification of the slave gateway 2, receives the first GEM frame and parses the first GEM frame to obtain an Ethernet frame, and sends the Ethernet frame to a terminal 2.

### Example 6

The Example 6 describes a communication procedure between ONU1 and ONU2 in response to that first port identifications are allocated to FTTR ONU1 and FTTR ONU2 performing communication therebetween, and a value of the first port identification allocated to the ONU1 is different from a value of the first port identification allocated to the ONU2.

In the example, the first port identifications are port identifications for communication between the ONUs, the value of the first port identification of the ONU1 is the same as a value of a second port identification of the ONU1, the value of the first port identification of the ONU2 is the same as a value of a second port identification of the ONU2, the second port identifications are port identifications for communication between the ONUs and the OLT.

In the example, a master gateway sends configuration information to the slave gateway 1 at which the ONU1 is located, through a GEM Port Network CTP ME, and in the configuration information, a port identification is an allocated first port identification Port-ID1, and a communication type is ONU-to-ONU or UNI-to-UNI, i.e., a value of an attribute of Direction is 4, and a peer-to-peer device identification is a device identification of the slave gateway 2 at which the ONU2 is located, an associated port identification is a first port identification Port-ID2 allocated to the slave gateway 2 at which the ONU2 is located.

In the example, the master gateway sends configuration information to the slave gateway 2 at which the ONU2 is located, through the GEM Port Network CTP ME, and in the configuration information, a port identification is the allocated first port identification Port-ID2, and a communication type is ONU-to-ONU or UNI-to-UNI, i.e., a value of an attribute of Direction is 4, and a peer-to-peer device identification is a device identification of the slave gateway 1 at which the ONU1 is located, an associated port identification is the first Port identification Port-ID1 allocated to the slave gateway 1 at which the ONU1 is located.

A procedure of the ONU1 initiating a communication to the ONU2 includes as follows.

The slave gateway 1 at which the ONU1 is located receives an Ethernet frame sent by a terminal 1.

The slave gateway 1 sends an acquisition request to the master gateway, with the acquisition request including a target MAC address in the Ethernet frame.

The master gateway searches for a first mapping relation corresponding to the target MAC address in pre-stored first mapping relations, and sends the first mapping relation corresponding to the target MAC address to the slave gateway 1.

The slave gateway 1 receives the first mapping relation corresponding to the target MAC address sent by the master gateway, and acquires a device identification in the first mapping relation corresponding to the target MAC address as the device identification of the slave gateway 2.

The slave gateway 1 acquires the port identification Port-ID1 in the configuration information, in which the peer-to-peer device identification is the device identification of the slave gateway 2, as the first port identification of the slave gateway 1.

The slave gateway 1 encapsulates the Ethernet frame into a payload domain of a first GEM frame, encapsulates the first port identification of the slave gateway 1 into a field of port identification in a GEM frame header of the first GEM frame, encapsulates the device identification of the slave gateway 2 as a first identification into a field of Options in the GEM frame header of the first GEM frame, encapsulates a second identification into a second highest bit in the field of Options in the GEM frame header of the first GEM frame, and sends the encapsulated first GEM frame to the master gateway; a value of the second identification is 1 and indicates that the first GEM frame is a GEM frame in the communication between the ONUs.

The master gateway receives the first GEM frame and acquires the second identification in the first GEM frame; and in response to determining that the second identification is configured to indicate that the first GEM frame is the GEM frame for communication between the ONUs, determines that the port identification in the first GEM frame is the port identification for communication between the ONUs.

The master gateway acquires an associated port identification in configuration information in which a port identification is the port identification in the first GEM frame and a peer-to-peer device identification is the device identification of the slave gateway 2, as the first port identification Port-ID2 of the slave gateway 2, replaces the port identification in the first GEM frame with the first port identification Port-ID2 of the slave gateway 2 to obtain an updated first GEM frame, and broadcasts the updated first GEM frame to all slave gateways.

The slave gateway 2 receives the updated first GEM frame, and in response to that a port identification in the updated first GEM frame is the first port identification of the slave gateway 2, and a first identification in the updated first GEM frame is the device identification of the slave gateway 2, receives the updated first GEM frame and parses the updated first GEM frame to obtain an Ethernet frame, and sends the Ethernet frame to a terminal 2.

In a fourth aspect, embodiments of the present application provide an electronic device, including: at least one processor; and a memory having at least one program stored thereon, the at least one program, executed by the at least one processor, causes the at least one processor to implement the communication method described above.

The processor is a device having a capability of processing data, includes, but is not limited to, a Central Processing Unit (CPU), and the like; the memory is a device having a capability of storing data, includes, but is not limited to, a random access memory (RAM, in particular, SDRAM, DDR, and the like), a read only memory (ROM), an electrically erasable programmable read only memory (EEPROM), and a FLASH.

In some implementations, the processor and the memory are connected together through a bus, and are further connected to other components of a computing device.

In a fifth aspect, embodiments of the present application provide a computer-readable medium having a computer program stored thereon, the computer program, executed by a processor, causes the processor to implement the communication method described above.

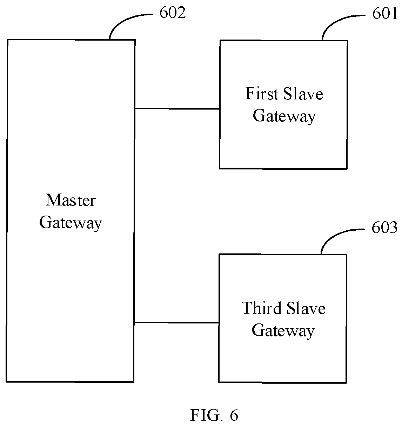

Fig. 6 is a block diagram of a communication system according to embodiments of the present application.

In a sixth aspect, referring to Fig. 6, embodiments of the present application provide a communication system, including: a first slave gateway 601 configured to receive an Ethernet frame sent by a first terminal, encapsulate a first port identification of the first slave gateway and the Ethernet frame into a first GEM frame, and send the first GEM frame to a master gateway, with the first port identification being a port identification for communication between optical network units; a master gateway 602 configured to receive a first GEM frame sent by the first slave gateway, with the first GEM frame including a port identification, and in response to determining that the port identification in the first GEM frame is a port identification for communication between optical network units, send the first GEM frame to all slave gateways; a third slave gateway 603 configured to receive a first GEM frame sent by the master gateway, with the first GEM frame including a port identification, and determine whether to perform corresponding processing on the first GEM frame according to the port identification in the first GEM frame.

In some implementations, encapsulating the first port identification of the first slave gateway and the Ethernet frame into the first GEM frame includes: encapsulating the first port identification and a first identification of the first slave gateway, and the Ethernet frame into the first GEM frame.

In some implementations, the first identification is a user network interface node identification of the first slave gateway; or the first identification is a user network interface node identification of a second slave gateway; the second slave gateway is a slave gateway connected with a second terminal, and the second terminal is a terminal to which a target media access control address in the Ethernet frame belongs.

In some implementations, the first slave gateway 601 is further configured to acquire the first port identification and the first identification of the first slave gateway.

In some implementations, the first slave gateway 601 is configured to acquire the first port identification and the first identification of the first slave gateway by: acquiring a device identification of the second slave gateway according to the target media access control address in the Ethernet frame; acquiring the first port identification and the first identification of the first slave gateway according to the device identification of the second slave gateway.

In some implementations, the first slave gateway 601 is configured to acquire the device identification of the second slave gateway according to the target media access control address in the Ethernet frame by: searching for a device identification corresponding to the target media access control address in a pre-stored first mapping relation between device identifications of slave gateways and media access control addresses, as the device identification of the second slave gateway.

In some implementations, the first slave gateway 601 is further configured to acquire a second mapping relation shared by other slave gateways, and store or update the first mapping relation according to the second mapping relation.

In some implementations, the first slave gateway 601 is configured to acquire the device identification of the second slave gateway according to the target media access control address in the Ethernet frame by: sending an acquisition request to the master gateway, with the acquisition request being configured for acquiring a first mapping relation corresponding to the target media access control address, and the first mapping relation being a mapping relation between device identifications of slave gateways and media access control addresses; and receiving the first mapping relation corresponding to the target media access control address sent by the master gateway, and acquiring a device identification in the first mapping relation corresponding to the target media access control address.

The master slave 602 is further configured to receive the acquisition request sent by the first slave gateway, search for the first mapping relation corresponding to the target media access control address in pre-stored first mapping relations, and send the first mapping relation corresponding to the target media access control address to the first slave gateway.

In some implementations, the first slave gateway 601 is configured to acquire the device identification of the second slave gateway according to the target media access control address in the Ethernet frame by: sending an acquisition request to other gateways, with the acquisition request being configured for acquiring a first mapping relation corresponding to the target media access control address, and the first mapping relation being a mapping relation between device identifications of slave gateways and media access control addresses; and receiving the first mapping relation corresponding to the target media access control address sent by the other gateways, and acquiring a device identification in the first mapping relation corresponding to the target media access control address.

The third slave gateway 603 is further configured to receive the acquisition request sent by the first slave gateway, search for the first mapping relation corresponding to the target media access control address in pre-stored first mapping relations, and send the first mapping relation corresponding to the target media access control address to the first slave gateway.

In some implementations, the first slave gateway 601 is configured to acquire the first port identification and the first identification of the first slave gateway according to the device identification of the second slave gateway by: acquiring first configuration information in which a peer-to-peer device identification is the device identification of the second slave gateway; acquiring a port identification in the first configuration information as the first port identification of the first slave gateway; in response to that the first identification is the user network interface node identification of the first slave gateway, acquiring a user network interface node identification in the first configuration information; in response to that the first identification is the user network interface node identification of the second slave gateway, acquiring the first identification according to the user network interface node identification in the first configuration information.

In some implementations, the first identification is a device identification of a second slave gateway; the second slave gateway is a slave gateway connected with a second terminal, and the second terminal is a terminal to which a target media access control address in the Ethernet frame belongs.

In some implementations, the first slave gateway 601 is further configured to acquire the device identification of the second slave gateway according to the target media access control address, and acquire the first port identification of the first slave gateway according to the device identification of the second slave gateway.

In some implementations, the first slave gateway 601 is configured to encapsulate the first port identification and the first identification of the first slave gateway, and the Ethernet frame into the first GEM frame by: encapsulating the Ethernet frame into a payload domain of the first GEM frame, and encapsulating the first port identification and the first identification of the first slave gateway into a GEM frame header of the first GEM frame.

In some implementations, the first slave gateway 601 is configured to encapsulate the first port identification and the first identification of the first slave gateway into the GEM frame header of the first GEM frame by: encapsulating the first port identification of the first slave gateway into a field of port identification in the GEM frame header, and encapsulating the first identification into a field of Options in the GEM frame header.

In some implementations, the first slave gateway 601 is configured to encapsulate the first identification into the field of Options in the GEM frame header by: encapsulating the first identification into any bit in the field of Options.

In some implementations, the first slave gateway 601 is configured to encapsulate the first identification into any bit in the field of Options by: encapsulating the first identification into a highest bit in the field of Options.

In some implementations, the first slave gateway 601 is configured to encapsulate the first port identification and the first identification of the first slave gateway into the GEM frame header of the first GEM frame by: encapsulating the first port identification, the first identification and a second identification of the first slave gateway into the GEM frame header of the first GEM frame, with the second identification being configured to indicate whether the first GEM frame is a GEM frame communicated between optical network units or a GEM frame communicated between the optical network unit and an optical line terminal.

In some implementations, the first slave gateway 601 is configured to encapsulate the first port identification, the first identification and the second identification of the first slave gateway into the GEM frame header of the first GEM frame by: encapsulating the first port identification of the first slave gateway into a field of port identification in the GEM frame header, and encapsulating the first identification and the second identification into a field of Options in the GEM frame header.

In some implementations, the master gateway 602 is configured to determine that the port identification in the first GEM frame is the port identification for the communication between the optical network units in response to: acquiring second configuration information in which a port identification is the port identification in the first GEM frame; and determining that a peer-to-peer device identification in the second configuration information is not a special value.

In some implementations, the master gateway 602 is configured to determine that the port identification in the first GEM frame is the port identification for the communication between the optical network units in response to: determining that there is third configuration information in which a port identification is the port identification in the first GEM frame and a peer-to-peer device identification is the first identification in the first GEM frame.

In some implementations, the first GEM frame further includes a second identification configured to indicate whether the first GEM frame is a GEM frame communicated between optical network units or a GEM frame communicated between the optical network unit and an optical line terminal; the master gateway 602 is configured to determine that the port identification in the first GEM frame is the port identification for the communication between the optical network units in response to: acquiring the second identification; and determining that the second identification is configured to indicate that the first GEM frame is the GEM frame communicated between the optical network units.

In some implementations, the master gateway 602 is further configured to acquire a first port identification of a second slave gateway, replace the port identification in the first GEM frame with the first port identification of the second slave gateway to obtain an updated first GEM frame, and send the updated first GEM frame to all slave gateways.

In some implementations, the master gateway 602 is configured to acquire the first port identification of the second slave gateway by: acquiring second configuration information in which a port identification is the port identification in the first GEM frame; acquiring an associated port identification in the second configuration information, with the associated port identification being the first port identification of the second slave gateway.

In some implementations, the third slave gateway 603 is configured to determine whether to perform corresponding processing on the first GEM frame according to the port identification in the first GEM frame by: determining whether to perform corresponding processing on the first GEM frame according to whether the port identification in the first GEM frame is a first port identification of the third slave gateway.

In some implementations, the third slave gateway 603 is configured to determine whether to perform corresponding processing on the first GEM frame according to whether the port identification in the first GEM frame is the first port identification of the third slave gateway by at least one of followings: in response to that the port identification in the first GEM frame is the first port identification of the third slave gateway, determining to perform corresponding processing on the first GEM frame; in response to that the port identification in the first GEM frame is not the first port identification of the third slave gateway, determining not to perform corresponding processing on the first GEM frame.

In some implementations, the third slave gateway 603 is configured to determine whether to perform corresponding processing on the first GEM frame according to the port identification in the first GEM frame by: determining whether to perform corresponding processing on the first GEM frame according to whether there is fourth configuration information in which an associated port identification is the port identification in the first GEM frame.

In some implementations, the third slave gateway 603 is configured to determine whether to perform corresponding processing on the first GEM frame according to whether there is the fourth configuration information in which the associated port identification is the port identification in the first GEM frame by at least one of followings: in response to that there is the fourth configuration information, determining to perform corresponding processing on the first GEM frame; in response to that there is no the fourth configuration information, determining not to perform corresponding processing on the first GEM frame.

In some implementations, the third slave gateway 603 is configured to determine whether to perform corresponding processing on the first GEM frame according to the port identification in the first GEM frame by: determining whether to perform corresponding processing on the first GEM frame according to the port identification in the first GEM frame and the first identification in the first GEM frame.

In some implementations, the third slave gateway 603 is configured to determine whether to perform corresponding processing on the first GEM frame according to the port identification in the first GEM frame and the first identification in the first GEM frame by: determining whether to perform corresponding processing on the first GEM frame according to whether the port identification in the first GEM frame is a first port identification of the third slave gateway and whether the first identification in the first GEM frame is a user network interface node identification of the third slave gateway.

In some implementations, the third slave gateway 603 is configured to determine whether to perform corresponding processing on the first GEM frame according to whether the port identification in the first GEM frame is the first port identification of the third slave gateway and whether the first identification in the first GEM frame is the user network interface node identification of the third slave gateway by at least one of followings: in response to that the port identification in the first GEM frame is the first port identification of the third slave gateway, and the first identification in the first GEM frame is not the user network interface node identification of the third slave gateway, determining to perform corresponding processing on the first GEM frame; in response to that the port identification in the first GEM frame is not the first port identification of the third slave gateway, or the first identification in the first GEM frame is the user network interface node identification of the third slave gateway, determining not to perform corresponding processing on the first GEM frame.

In some implementations, the third slave gateway 603 is configured to determine whether to perform corresponding processing on the first GEM frame according to the port identification in the first GEM frame and the first identification in the first GEM frame by: determining whether to perform corresponding processing on the first GEM frame according to whether the port identification in the first GEM frame is a first port identification of the third slave gateway and whether the first identification in the first GEM frame is a device identification of the third slave gateway.

In some implementations, the third slave gateway 603 is configured to determine whether to perform corresponding processing on the first GEM frame according to whether the port identification in the first GEM frame is the first port identification of the third slave gateway and whether the first identification in the first GEM frame is the device identification of the third slave gateway by at least one of followings: in response to that the port identification in the first GEM frame is the first port identification of the third slave gateway, and the first identification in the first GEM frame is the device identification of the third slave gateway, determining to perform corresponding processing on the first GEM frame; in response to that the port identification in the first GEM frame is not the first port identification of the third slave gateway, or the first identification in the first GEM frame is not the device identification of the third slave gateway, determining not to perform corresponding processing on the first GEM frame.

In some implementations, the third slave gateway 603 is configured to determine whether to perform corresponding processing on the first GEM frame according to whether the port identification in the first GEM frame is the first port identification of the third slave gateway and whether the first identification in the first GEM frame is the user network interface node identification of the third slave gateway by at least one of followings: in response to that the port identification in the first GEM frame is the first port identification of the third slave gateway, and the first identification in the first GEM frame is the user network interface node identification of the third slave gateway, determining to perform corresponding processing on the first GEM frame; in response to that the port identification in the first GEM frame is not the first port identification of the third slave gateway, or the first identification in the first GEM frame is not the user network interface node identification of the third slave gateway, determining not to perform corresponding processing on the first GEM frame.

In some implementations, the third slave gateway 603 is configured to determine whether to perform corresponding processing on the first GEM frame according to the port identification in the first GEM frame and the first identification in the first GEM frame by: determining whether to perform corresponding processing on the first GEM frame according to whether there is fourth configuration information in which an associated port identification is the port identification in the first GEM frame and whether the first identification in the first GEM frame is a device identification of the third slave gateway.

The specific implementation process of the communication system described above is the same as the specific implementation process of the communication method described above, and is not repeated herein.

It should be understood by those of ordinary skill in the art that all or some of the operations in the methods disclosed above, or the functional modules/components in the system and device described above may be implemented as software, firmware, hardware, or suitable combinations thereof. In a hardware implementation, the division between the functional modules/components stated above does not correspond to the division of physical components; for example, one physical component may have a plurality of functions, or one function or operation may be performed through a cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, the computer-readable medium may include computer storage medium (or non-transitory medium) and communication medium (or transitory medium). As known to those skilled in the art, the computer storage medium includes volatile/nonvolatile or removable/non-removable medium used in any method or technology for storing information (such as computer-readable instructions, data structures, program modules and other data). The computer storage medium includes, but is not limited to, RAM, ROM, EEPROM, a flash memory or other memory techniques, CD-ROM, a Digital Video Disk (DVD) or other optical discs, magnetic cassettes, magnetic tapes, magnetic disks or other magnetic storage devices, or any other medium which can be used to store the desired information and can be accessed by a computer. In addition, as known to those skilled in the art, the communication medium generally includes computer-readable instructions, data structures, program modules or other data in a modulated data signal, such as a carrier wave or other transmission mechanism, and may include any information delivery medium.

The present application describes the exemplary embodiments, and although specific terms are employed, they are used and should only be interpreted in a generic and descriptive meaning and not for purposes of a limitation. In some examples, it is apparent to those skilled in the art that features, characteristics and/or elements described in connection with specific embodiments may be used alone or in combination with features, characteristics and/or elements described in connection with other embodiments, unless explicitly stated otherwise. Therefore, it should be understood by those skilled in the art that various changes in form and details may be made without departing from the scope of the present application as set forth in the appended claims.

## Claims

1. A communication method, applied to a first slave gateway, comprising:
receiving an Ethernet frame sent by a first terminal;
encapsulating a first port identification of the first slave gateway and the Ethernet frame into a first gigabit-capable passive optical network (GPON) encapsulation method (GEM) frame, and sending the first GEM frame to a master gateway; wherein the first port identification is a port identification for communication between optical network units.

2. The communication method according to claim 1, wherein encapsulating the first port identification of the first slave gateway and the Ethernet frame into the first GEM frame comprises:
encapsulating the first port identification and a first identification of the first slave gateway, and the Ethernet frame into the first GEM frame.

3. The communication method according to claim 2, wherein the first identification is a user network interface node identification of the first slave gateway; or
the first identification is a user network interface node identification of a second slave gateway; wherein the second slave gateway is a slave gateway connected with a second terminal, and the second terminal is a terminal to which a target media access control address in the Ethernet frame belongs.

4. The communication method according to claim 3, after receiving the Ethernet frame sent by the first terminal, and before encapsulating the first port identification and the first identification of the first slave gateway, and the Ethernet frame into the first GEM frame, the method further comprises:
acquiring the first port identification and the first identification of the first slave gateway.

5. The communication method according to claim 4, wherein acquiring the first port identification and the first identification of the first slave gateway comprises:
acquiring a device identification of the second slave gateway according to the target media access control address; wherein the second slave gateway is a slave gateway connected with the second terminal;
acquiring the first port identification and the first identification of the first slave gateway according to the device identification of the second slave gateway.

6. The communication method according to claim 5, wherein acquiring the device identification of the second slave gateway according to the target media access control address comprises:
searching for a device identification corresponding to the target media access control address in a pre-stored first mapping relation between device identifications of slave gateways and media access control addresses, as the device identification of the second slave gateway.

7. The communication method according to claim 6, before searching for the device identification corresponding to the target media access control address, the method further comprises:
acquiring a second mapping relation shared by other slave gateways, and storing or updating the first mapping relation according to the second mapping relation.

8. The communication method according to claim 5, wherein acquiring the device identification of the second slave gateway according to the target media access control address in the Ethernet frame comprises:
sending an acquisition request to the master gateway; wherein the acquisition request is configured for acquiring a first mapping relation corresponding to the target media access control address; the first mapping relation is a mapping relation between device identifications of slave gateways and media access control addresses;
receiving the first mapping relation corresponding to the target media access control address sent by the master gateway, and acquiring a device identification in the first mapping relation corresponding to the target media access control address.

9. The communication method according to claim 5, wherein acquiring the device identification of the second slave gateway according to the target media access control address in the Ethernet frame comprises:
sending an acquisition request to other gateways; wherein the acquisition request is configured for acquiring a first mapping relation corresponding to the target media access control address; the first mapping relation is a mapping relation between device identifications of slave gateways and media access control addresses;
receiving the first mapping relation corresponding to the target media access control address sent by the other gateways, and acquiring a device identification in the first mapping relation corresponding to the target media access control address.

10. The communication method according to claim 5, wherein acquiring the first port identification and the first identification of the first slave gateway according to the device identification of the second slave gateway comprises:
acquiring first configuration information in which a peer-to-peer device identification is the device identification of the second slave gateway;
acquiring a port identification in the first configuration information as the first port identification of the first slave gateway;
in response to that the first identification is the user network interface node identification of the first slave gateway, acquiring a user network interface node identification in the first configuration information; in response to that the first identification is the user network interface node identification of the second slave gateway, acquiring the first identification according to the user network interface node identification in the first configuration information.

11. The communication method according to claim 2, wherein the first identification is a device identification of a second slave gateway; wherein the second slave gateway is a slave gateway connected with a second terminal, the second terminal is a terminal to which a target media access control address in the Ethernet frame belongs.

12. The communication method according to claim 11, after receiving the Ethernet frame sent by the first terminal, and before encapsulating the first port identification and the first identification of the first slave gateway, and the Ethernet frame into the first GEM frame, the method further comprises:
acquiring the device identification of the second slave gateway according to the target media access control address;
acquiring the first port identification of the first slave gateway according to the device identification of the second slave gateway.

13. The communication method according to claim 2, wherein encapsulating the first port identification and the first identification of the first slave gateway, and the Ethernet frame into the first GEM frame comprises:
encapsulating the Ethernet frame into a payload domain of the first GEM frame, and encapsulating the first port identification and the first identification of the first slave gateway into a GEM frame header of the first GEM frame.

14. The communication method according to claim 13, wherein encapsulating the first port identification and the first identification of the first slave gateway into the GEM frame header of the first GEM frame comprises:
encapsulating the first port identification of the first slave gateway into a field of port identification in the GEM frame header, and encapsulating the first identification into a field of Options in the GEM frame header.

15. The communication method according to claim 14, wherein encapsulating the first identification into the field of Options in the GEM frame header comprises:
encapsulating the first identification into any bit in the field of Options.

16. The communication method according to claim 14, wherein encapsulating the first identification into any bit in the field of Options comprises:
encapsulating the first identification into a highest bit in the field of Options.

17. The communication method according to claim 13, wherein encapsulating the first port identification and the first identification of the first slave gateway into the GEM frame header of the first GEM frame comprises:
encapsulating the first port identification, the first identification and a second identification of the first slave gateway into the GEM frame header of the first GEM frame; wherein the second identification is configured to indicate whether the first GEM frame is a GEM frame communicated between optical network units or a GEM frame communicated between the optical network unit and an optical line terminal.

18. The communication method according to claim 17, wherein encapsulating the first port identification, the first identification and the second identification of the first slave gateway into the GEM frame header of the first GEM frame comprises:
encapsulating the first port identification of the first slave gateway into a field of port identification in the GEM frame header, and encapsulating the first identification and the second identification into a field of Options in the GEM frame header.

19. A communication method, applied to a master gateway, comprising:
receiving a first GEM frame sent by a first slave gateway; wherein the first GEM frame comprises a port identification;
in response to determining that the port identification in the first GEM frame is a port identification for communication between optical network units, sending the first GEM frame to all slave gateways.

20. The communication method according to claim 19, wherein determining that the port identification in the first GEM frame is the port identification for the communication between the optical network units comprises:
acquiring second configuration information in which a port identification is the port identification in the first GEM frame;
determining that a peer-to-peer device identification in the second configuration information is not a special value.

21. The communication method according to claim 19, wherein the first GEM frame further comprises a first identification;
the first identification is a user network interface node identification of the first slave gateway; or
the first identification is a user network interface node identification of a second slave gateway; wherein the second slave gateway is a slave gateway connected with a second terminal, the second terminal is a terminal to which a target media access control address in an Ethernet frame in the first GEM frame belongs; or
the first identification is a device identification of the second slave gateway.

22. The communication method according to claim 21, wherein determining that the port identification in the first GEM frame is the port identification for the communication between the optical network units comprises:
determining that there is third configuration information in which a port identification is the port identification in the first GEM frame and a peer-to-peer device identification is the first identification in the first GEM frame.

23. The communication method according to claim 19, wherein the first GEM frame further comprises a second identification configured to indicate whether the first GEM frame is a GEM frame communicated between optical network units or a GEM frame communicated between the optical network unit and an optical line terminal;
determining that the port identification in the first GEM frame is the port identification for the communication between the optical network units comprises:
acquiring the second identification;
determining that the second identification is configured to indicate that the first GEM frame is the GEM frame communicated between the optical network units.

24. The communication method according to claim 19, before sending the first GEM frame, the method further comprises:
acquiring a first port identification of a second slave gateway; and
replacing the port identification in the first GEM frame with the first port identification of the second slave gateway to obtain an updated first GEM frame,
sending the first GEM frame to all slave gateways comprises: sending the updated first GEM frame to all slave gateways.

25. The communication method according to claim 24, wherein acquiring the first port identification of the second slave gateway comprises:
acquiring second configuration information in which a port identification is the port identification in the first GEM frame;
acquiring an associated port identification in the second configuration information, as the first port identification of the second slave gateway.

26. A communication method, applied to a third slave gateway, comprising:
receiving a first GEM frame sent by a master gateway; wherein the first GEM frame comprises a port identification;
determining whether to perform corresponding processing on the first GEM frame according to the port identification in the first GEM frame.

27. The communication method according to claim 26, wherein determining whether to perform corresponding processing on the first GEM frame according to the port identification in the first GEM frame comprises:
determining whether to perform corresponding processing on the first GEM frame according to whether the port identification in the first GEM frame is a first port identification of the third slave gateway.

28. The communication method according to claim 27, wherein determining whether to perform corresponding processing on the first GEM frame according to whether the port identification in the first GEM frame is the first port identification of the third slave gateway comprises at least one of:
in response to that the port identification in the first GEM frame is the first port identification of the third slave gateway, determining to perform corresponding processing on the first GEM frame;
in response to that the port identification in the first GEM frame is not the first port identification of the third slave gateway, determining not to perform corresponding processing on the first GEM frame.

29. The communication method according to claim 26, wherein determining whether to perform corresponding processing on the first GEM frame according to the port identification in the first GEM frame comprises:
determining whether to perform corresponding processing on the first GEM frame according to whether there is fourth configuration information in which an associated port identification is the port identification in the first GEM frame.

30. The communication method according to claim 29, wherein determining whether to perform corresponding processing on the first GEM frame according to whether there is the fourth configuration information in which the associated port identification is the port identification in the first GEM frame comprises at least one of:
in response to that there is the fourth configuration information, determining to perform corresponding processing on the first GEM frame;
in response to that there is no the fourth configuration information, determining not to perform corresponding processing on the first GEM frame.

31. The communication method according to claim 26, wherein the first GEM frame further comprises a first identification; determining whether to perform corresponding processing on the first GEM frame according to the port identification in the first GEM frame comprises:
determining whether to perform corresponding processing on the first GEM frame according to the port identification in the first GEM frame and the first identification in the first GEM frame.

32. The communication method according to claim 31, wherein the first identification is a user network interface node identification of a first slave gateway; or
the first identification is a user network interface node identification of a second slave gateway; wherein the second slave gateway is a slave gateway connected with a second terminal, the second terminal is a terminal to which a target media access control address in an Ethernet frame in the first GEM frame belongs.

33. The communication method according to claim 32, wherein determining whether to perform corresponding processing on the first GEM frame according to the port identification in the first GEM frame and the first identification in the first GEM frame comprises:
determining whether to perform corresponding processing on the first GEM frame according to whether the port identification in the first GEM frame is a first port identification of the third slave gateway and whether the first identification in the first GEM frame is a user network interface node identification of the third slave gateway.

34. The communication method according to claim 33, wherein the first identification is the user network interface node identification of the first slave gateway;
determining whether to perform corresponding processing on the first GEM frame according to whether the port identification in the first GEM frame is the first port identification of the third slave gateway and whether the first identification in the first GEM frame is the user network interface node identification of the third slave gateway comprises at least one of:
in response to that the port identification in the first GEM frame is the first port identification of the third slave gateway, and the first identification in the first GEM frame is not the user network interface node identification of the third slave gateway, determining to perform corresponding processing on the first GEM frame;
in response to that the port identification in the first GEM frame is not the first port identification of the third slave gateway, or the first identification in the first GEM frame is the user network interface node identification of the third slave gateway, determining not to perform corresponding processing on the first GEM frame.

35. The communication method according to claim 32, wherein the first identification is the user network interface node identification of the second slave gateway;
determining whether to perform corresponding processing on the first GEM frame according to whether the port identification in the first GEM frame is the first port identification of the third slave gateway and whether the first identification in the first GEM frame is the user network interface node identification of the third slave gateway comprises at least one of:
in response to that the port identification in the first GEM frame is the first port identification of the third slave gateway, and the first identification in the first GEM frame is the user network interface node identification of the third slave gateway, determining to perform corresponding processing on the first GEM frame;
in response to that the port identification in the first GEM frame is not the first port identification of the third slave gateway, or the first identification in the first GEM frame is not the user network interface node identification of the third slave gateway, determining not to perform corresponding processing on the first GEM frame.

36. The communication method according to claim 31, wherein the first identification is a device identification of a second slave gateway; wherein the second slave gateway is a slave gateway connected with a second terminal, the second terminal is a terminal to which a target media access control address in an Ethernet frame in the first GEM frame belongs.

37. The communication method according to claim 36, wherein determining whether to perform corresponding processing on the first GEM frame according to the port identification in the first GEM frame and the first identification in the first GEM frame comprises:
determining whether to perform corresponding processing on the first GEM frame according to whether the port identification in the first GEM frame is a first port identification of the third slave gateway and whether the first identification in the first GEM frame is a device identification of the third slave gateway.

38. The communication method according to claim 37, wherein determining whether to perform corresponding processing on the first GEM frame according to whether the port identification in the first GEM frame is the first port identification of the third slave gateway and whether the first identification in the first GEM frame is the device identification of the third slave gateway comprises at least one of:
in response to that the port identification in the first GEM frame is the first port identification of the third slave gateway, and the first identification in the first GEM frame is the device identification of the third slave gateway, determining to perform corresponding processing on the first GEM frame;
in response to that the port identification in the first GEM frame is not the first port identification of the third slave gateway, or the first identification in the first GEM frame is not the device identification of the third slave gateway, determining not to perform corresponding processing on the first GEM frame.

39. The communication method according to claim 31, wherein determining whether to perform corresponding processing on the first GEM frame according to the port identification in the first GEM frame and the first identification in the first GEM frame comprises:
determining whether to perform corresponding processing on the first GEM frame according to whether there is fourth configuration information in which an associated port identification is the port identification in the first GEM frame and whether the first identification in the first GEM frame is a device identification of the third slave gateway.

40. An electronic device, comprising:
at least one processor;
a memory having at least one program stored thereon, the at least one program, executed by the at least one processor, causes the at least one processor to implement the communication method of any one of claims 1 to 39.

41. A computer-readable medium having a computer program stored thereon, the computer program, executed by a processor, causes the processor to implement the communication method of any one of claims 1 to 39.

42. A communication system, comprising:
a first slave gateway configured to receive an Ethernet frame sent by a first terminal, encapsulate a first port identification of the first slave gateway and the Ethernet frame into a first GEM frame, and send the first GEM frame to a master gateway; wherein the first port identification is a port identification for communication between optical network units;
the master gateway configured to receive a first GEM frame sent by the first slave gateway; wherein the first GEM frame comprises a port identification; and in response to determining that the port identification in the first GEM frame is a port identification for communication between optical network units, send the first GEM frame to all slave gateways; and
a third slave gateway configured to receive a first GEM frame sent by the master gateway; wherein the first GEM frame comprises a port identification; and determine whether to perform corresponding processing on the first GEM frame according to the port identification in the first GEM frame.
